# EUROPEAN PATENT APPLICATION

(11) **EP 2 498 175 A1**
(43) Date of publication of application: **12.09.2012**
(21) Application number: 12152888.9
(22) Date of filing: 27.01.2012
(51) Int. Cl.: G06F 3/048, G06F 17/24

(54) **Mobile terminal and text cursor operating method thereof**

(30) Priority: 09.03.2011 KR 20110021106
(71) Applicant: LG Electronics, Inc., Seoul (KR)
(72) Inventor: Kim, Jonghwan, Incheon (KR); Vijayalaxmi, Mahantesh, Patil, Karnataka (IN); Prakash, Satya, Karnataka (IN); Ashesh, Chagana Boyana, Karnataka (IN)
(74) Representative: TER MEER - STEINMEISTER & PARTNER GbR

(57) **Abstract**

Disclosed are a mobile terminal and a text cursor operating method thereof. Through touch and multi-touch operations (flicking, touch & drag and multi-touch), may be controlled cursor movement on a text, a mode conversion between a cursor mode and a block mode, setting one or more blocks with respect to a text region in a block mode, and block movement. This may allow edition operations (selection, block addition, copy, cut and paste, search and replace, deletion and so on) to be performed with respect to each block or between blocks.

## Description

### BACKGROUND OF THE INVENTION

### 1. Field of the Invention

The present invention relates to an operation of a mobile terminal, and particularly, to a cursor operating method using a touch input.

### 2. Background of the Invention

In general, a mobile terminal is configured to perform various functions. These various functions include video and voice call communications, still or moving images capturing using a camera, voice storing, music file reproducing through a speaker system, image or video displaying, etc. Some mobile terminals include additional functions such as playing games, and other mobile terminals are implemented as multimedia players. Moreover, recent mobile terminals are configured to allow a user to view video or television programs by receiving broadcasting or multicast signals.

Various attempts have been made to implement enhanced functions of the mobile terminal not only by structural improvements, but also by hardware or software improvements.

A touch function of the mobile terminal allows even a user having a difficulty in inputting buttons or keys to conveniently operate the mobile terminal, by using a touch screen. Recently, this touch function is considered as an important function of the mobile terminal, together with a User Interface (UI) as well as simple input. Accordingly, developing a suitable UI is required more.

Generally, when editing a text of a mobile terminal, a user performs operations to move, correct, delete, etc. with respect to the text by manipulating a cursor through a key input or a touch input. Especially, a magnifying glass function is used to precisely edit a text.

However, the conventional cursor operating method has the following problems.

Firstly, when editing a text through cursor manipulations using keys, only simple movements of the cursor are possible, and a user has to know corresponding keys to perform other operations for editions (block setting, copy and paste) in advance.

Furthermore, when editing a text through a touch input, a cursor can be displayed through a touch input (cursor mode), and then the cursor can be moved through a multi-touch input. However, in this case, block setting (block mode) and detailed operations in the cursor mode and the block mode have not been disclosed yet.

According to the recent trend that most of users manipulates mobile terminals through touch inputs, required are various scenarios for operating a text cursor in a more convenient manner when editing a text.

### SUMMARY OF THE INVENTION

Therefore, an aspect of the detailed description is to provide a text cursor operating method using a touch input of a mobile terminal.

Another aspect of the detailed description is to provide a text cursor operating method of a mobile terminal capable of effectively performing conversions between a cursor mode and a block mode, and capable of effectively performing text editions in each mode.

To achieve these and other advantages and in accordance with the purpose of this specification, as embodied and broadly described herein, there is provided a text cursor operating method of a mobile terminal, the method comprising: displaying a cursor on a text region in a cursor mode; moving the cursor according to the number of times (frequency) of flicking in the cursor mode; converting the cursor mode into a block mode upon detection of a mode conversion input; setting one or more blocks on the text region by changing a touch range according to a multi-touch frequency in the block mode; and performing an edition operation with respect to the set blocks.

According to another aspect of the present invention, there is provided a text cursor operating method of a mobile terminal, the method comprising: displaying a cursor and a cursor moving icon in a cursor mode; moving the cursor by touching the cursor moving icon; converting the cursor mode into a block mode when the cursor moving icon is long-touched; setting one or more blocks on a text region by touching or dragging the cursor moving icon in the block mode; and performing an edition operation with respect to the set blocks.

To achieve these and other advantages and in accordance with the purpose of this specification, as embodied and broadly described herein, there is also provided a mobile terminal, comprising: a display unit configured to display a cursor in a cursor mode; and a controller configured to move the cursor according to a flicking frequency detected on a text region in a cursor mode, configured to set one or more blocks on the text region by controlling a touch range according to a multi-touch frequency in a block mode, and configured to perform an edition operation with respect to the set blocks according to a user's input.

According to another aspect of the present invention, there is provided a mobile terminal, comprising: a display unit configured to display a cursor and a cursor moving icon in a cursor mode; and a controller configured to move the cursor according to a touch of the cursor moving icon, configured to convert the cursor mode into a block mode when the cursor moving icon is long-touched, configured to set one or more blocks on the text region based on a touch or a drag of the cursor moving icon, and configured to perform an edition operation with respect to the set blocks according to a user's input.

Preferably, the controller may set a new block on a corresponding position when another region of a text is double-tapped in a state that the existing block has been touched, and/or may set a new block on a corresponding position when another region of a text is double-touched in a state that an edge portion of the existing block has been touched.

Preferably, the controller may fix a position of the set block when the set block is long-touched, and/or may display the set block on the same position even if a page switching operation is performed.

Preferably, the controller may display the fixed block in a transparent state, and highlights replaceable candidate words on a text of each page in a different color when a page switching operation is performed.

Preferably, the controller may move the cursor according to a touch of a cursor moving icon. The cursor moving icon may be displayed on right and left sides or up and down sides of the text region when the text region is long-touched in an edition mode. The controller may convert the cursor mode into a block mode when the cursor moving icon is long-touched. The controller may set one or more blocks on the text region based on a touch or a drag with respect to the cursor moving icon, and/or may perform an edition operation with respect to the set blocks according to a user's input.

Preferably, the controller may set a block range within the same line by touching the cursor moving icon, and sets a block range including another line by touching and dragging the cursor moving icon.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal according to one embodiment of the present invention;
FIG. 2 is a block diagram of a wireless communication system where the mobile terminal according to one embodiment of the present invention is operable;
FIG. 3 is a view showing an example to set a cursor mode and to display a cursor icon in the cursor mode according to the present invention;
FIGS. 4A to 4C are views showing examples to move a cursor icon through a flicking operation in a cursor mode;
FIGS. 5A and 5B are views showing examples to set a block mode;
FIGS. 6A to 6C are views showing examples to set blocks by controlling a block range in a block mode;
FIG. 7 is a view showing examples to display an option menu at one side of a set block;
FIG. 8 is a view showing examples to set multi blocks in a block mode;
FIGS. 9A and 9B are views showing examples to perform an edition operation with respect to a plurality of blocks based on an option menu or through gestures;
FIG. 10 is a view showing an example of an edition operation between blocks which have been set on different pages;
FIG. 11 is a view showing an example to display replaceable candidate characters when a fixed block is displayed on a different page;
FIG. 12 is a view showing an example to display blocks when converting a screen display mode according to the present invention;
FIGS. 13A and 13B are views showing cursor movements using miniature icons;
FIGS. 14A and 14B are views showing examples to perform block setting using miniature icons;
FIGS. 15A and 15B are views showing detailed operations of FIGS. 14A and 14B;
FIG. 16 is a flowchart showing a text cursor operating method of a mobile terminal according to one embodiment of the present invention; and
FIG. 17 is a flowchart showing a text cursor operating method of a mobile terminal according to another embodiment of the present invention.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a mobile terminal according to the present invention will be explained in more detail with reference to the attached drawings. The suffixes attached to components of the wireless speaker, such as 'module' and 'unit or portion' were used for facilitation of the detailed description of the present invention. Therefore, the suffixes do not have different meanings from each other.

A terminal may be implemented in various types. For instance, the terminal in the present description includes a mobile terminal such as a portable phone, a smart phone, a notebook computer, a digital broadcasting terminal, Personal Digital Assistants (PDA), Portable Multimedia Player (PMP), a navigation system, and a fixed terminal such as a digital TV, a desktop computer, etc. It is assumed that the terminal of the present invention is a mobile terminal. However, it will be obvious to those skilled in the art that the present invention may be also applicable to the fixed terminal, except for specific configurations for mobility.

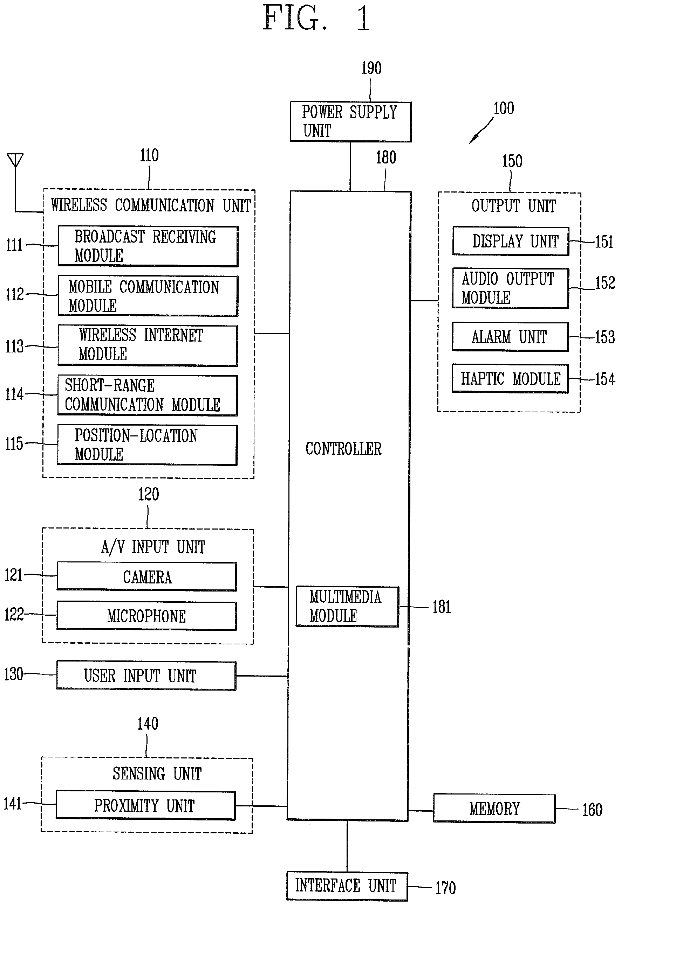

FIG. 1 is a block diagram of a mobile terminal according to an embodiment of the present invention.

As shown in FIG. 1, the mobile terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160 (or anther type of storage medium).

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for checking or acquiring a location (or position) of the mobile communication terminal. For example, the location information module 115 may include a GPS (Global Positioning System) module that receives location information from a plurality of satellites. Here, the location information may include coordinate information represented by latitude and longitude values. For example, the GPS module may measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites. Furthermore the GPS module may acquire speed information by real time calculating a current position.

The A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like. In particular, when the touch pad is overlaid on the display unit 151 in a layered manner, it may form a touch screen.

The sensing unit 140 detects a current status (or state) of the mobile terminal 100 such as an opened or closed state of the mobile terminal 100, a location of the mobile terminal 100, the presence or absence of a user's tou8ch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141. The user's touch include proximity touch as well as touch, touch & drag, multi-touch and long touch.

The sensing unit 140 includes a geomagnetic sensor configured to calculate a moving direction when a user moves, a gyro sensor configured to calculate a rotation direction, and an acceleration sensor.

The interface unit 170 serves as an interface by which at least one external device may be connected with the mobile terminal 100. For example, the external devices may include wired or wireless headset ports, an external power supply (or battery charger) ports, wired or wireless data ports, memory card ports, ports for connecting a device having an identification module, audio input/output (I/O) ports, video I/O ports, earphone ports, or the like.

Here, the identification module may be a memory chip that stores various information for authenticating user's authority for using the mobile terminal 100 and may include a user identity module (UIM), a subscriber identity module (SIM) a universal subscriber identity module (USIM), and the like. In addition, the device having the identification module (referred to as the 'identifying device', hereinafter) may take the form of a smart card. Accordingly, the identifying device may be connected with the terminal 100 via a port or other connection mechanisms. The interface unit 170 may be used to receive inputs (e.g., data, information, power, etc.) from an external device and transfer the received inputs to one or more elements within the mobile terminal 100 or may be used to transfer data between the mobile terminal and an external device.

When the mobile terminal 100 is connected with an external cradle, the interface unit 170 may serve as a conduit to allow power from the cradle to be supplied therethrough to the mobile terminal 100 or may serve as a conduit to allow various command signals inputted from the cradle to be transferred to the mobile terminal therethrough. Various command signals or power inputted from the cradle may operate as signals for recognizing when the mobile terminal is properly mounted on the cradle.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call.

When the display unit 151 and the touch pad are overlaid in a layered manner to form a touch screen, the display unit 151 may function as both an input device and an output device. The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like. Some of these displays may be configured to be transparent so that outside may be seen therethrough, which may be referred to as a transparent display. A representative example of this transparent display may include a transparent organic light emitting diode (TOLED), etc. The mobile terminal 100 may include two or more display units 151. For example, the mobile terminal may include both an external display unit (not shown) and an internal display unit (not shown). The touch screen may be configured to detect a touch input pressure as well as a touch input location and a touch input area.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, and so on.

The alarm unit 153 may provide outputs to inform about the occurrence of an event of the mobile terminal 100. Typical events may include call reception, message reception, key signal inputs, a touch input, etc. In addition to audio or video outputs, the alarm unit 153 may provide outputs in a different manner to inform about the occurrence of an event. The video signal or the audio signal may be output via the display unit 151 or the audio output module 152. Accordingly, the display unit 151 or the audio output module 152 may be classified as a part of the alarm unit 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data relating to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 serves to supply power to each component by receiving external power or internal power under control of the controller 180.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

The mobile terminal according to the present disclosure may not be limited to the slide type mobile terminal, but may be applied to various types such as a bar type, a folder type, a swing type, and a swivel type.

In addition, the mobile terminal 100 of FIG. 1 may be configured to operate within a communication system which transmits data via frames or packets, including both wireless and wireline communication systems, and satellite-based communication systems. Such communication systems utilize different air interfaces and/or physical layers.

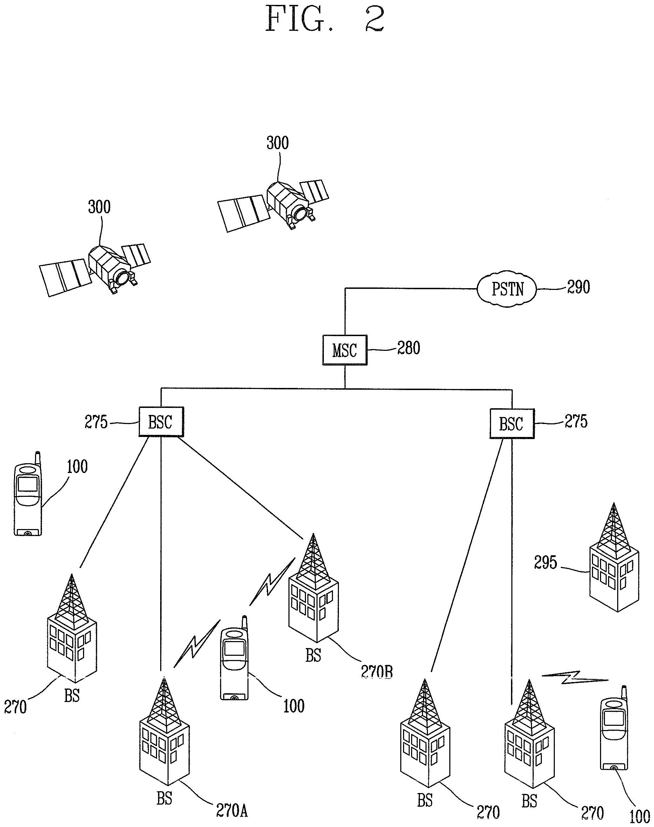

Hereinafter, a communication system where the mobile terminal of the present disclosure is operable will be explained with reference to FIG. 2.

Examples of such air interfaces utilized by the communication systems include, for example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of a non-limiting example only, further description will relate to a CDMA communication system, but such teachings apply equally to other system types.

As shown in FIG. 2, a CDMA wireless communication system may include a plurality of mobile terminals 100, a plurality of base stations 270, a plurality of base station controllers (BSCs) 275, and a mobile switching center (MSC) 280. The MSC 280 is configured to interface with a public switch telephone network (PSTN) 290, and the MSC 280 is also configured to interface with the BSCs 275. Further, the BSCs 275 are coupled to the base stations 270 via backhaul lines. In addition, the backhaul lines may be configured in accordance with any of several interfaces including, for example, E1/T1, ATM, IP, PPP, Frame Relay, HDSL, ADSL, or xDSL. Further, the system may include more than two BSCs 275.

Also, each base station 270 may include one or more sectors, each sector having an omni-directional antenna or an antenna pointed in a particular direction radially away from the base station 270. Alternatively, each sector may include two antennas for diversity reception. In addition, each base station 270 may be configured to support a plurality of frequency assignments, with each frequency assignment having a particular spectrum (e.g., 1.25 MHz, 5 MHz).

The intersection of a sector and frequency assignment may be referred to as a CDMA channel. The base stations 270 may also be referred to as base station transceiver subsystems (BTSs). In some instances, the term "base station" may be used to refer collectively to a BSC 275, and one or more base stations 270. The base stations 270 may also be denoted as "cell sites." Alternatively, individual sectors of a given base station 270 may be referred to as cell sites.

As shown in FIG. 2, a broadcasting transmitter (BT) 295 transmits a broadcasting signal to mobile terminals 100 operating within the system. In addition, the broadcast receiving module 111 (FIG. 1) of the mobile terminal 100 is typically configured to receive broadcast signals transmitted by the DMB transmitter 295.

FIG. 2 further illustrates several global positioning system (GPS) satellites 300. Such satellites 300 facilitate locating the position of some or all of the mobile terminals 100. In FIG. 2, two satellites are shown, but positioning information may be obtained with greater or fewer satellites. In addition, the position-location module 115 (FIG. 1) of the mobile terminal 100 is typically configured to cooperate with the satellites 300 to obtain desired position information. However, other types of position detection technology, such as location technology that may be used in addition to or instead of GPS location technology, may alternatively be implemented. Some or all of the GPS satellites 300 may alternatively or additionally be configured to provide satellite DMB transmissions.

Further, during typical operation of the wireless communication system, the base stations 270 receive sets of reverse-link signals from various mobile terminals 100. The mobile terminals 100 engage in calls, messaging, and other communications. In addition, each reverse-link signal received by a given base station 270 is processed within that base station 270, and the resulting data is forwarded to an associated BSC 275. The BSC 275 provides call resource allocation and mobility management functionality including soft handoffs between the base stations 270. Further, the BSCs 275 also route the received data to the MSC 280, which provides additional routing services for interfacing with the PSTN 290. Similarly, the PSTN interfaces with the MSC 280, and the MSC 280 interfaces with the BSCs 275. The BSCs 275 also control the base stations 270 to transmit sets of forward-link signals to the mobile terminals 100.

The present invention provides various text managing methods using touch inputs when editing texts or memos. The memo includes a general memo and a memo included in a photo. And, the touch includes a real touch, a proximity touch, a single touch (touch and flicking) and a multi touch (double touch, multi-point touch, touch & drag and long touch).

According to one embodiment of the present invention, a cursor (or cursor icon) is moved in detail in a cursor mode through a touch input at the time of a text edition. A cursor movement is determined based on a touch type, a touch frequency (the number of times that touches are performed) and a touch direction. And, the cursor may move by one line or a plurality of lines.

According to another embodiment of the present invention, a mode conversion between a cursor mode and a text mode is performed by using touch inputs in a text edition mode. When performing a mode setting and a mode conversion, a color (or a shape) of a cursor and other effects (sound and vibration) may be differently displayed, and an indicator indicating each mode may be displayed on a predetermined position.

According to still another embodiment of the present invention, each kind of text operations for a text edition (selection, block addition, copy, cut and paste, search and replace, deletion and so on) are performed by moving a cursor through touch inputs in a block mode, and by controlling one or more block ranges.

In the block mode, one or more blocks may be set. Alternatively, the blocks may be moved to another page in a state that a specific block is fixed, or desired blocks may be added.

### 1. Setting a cursor mode and moving a cursor icon in a cursor mode

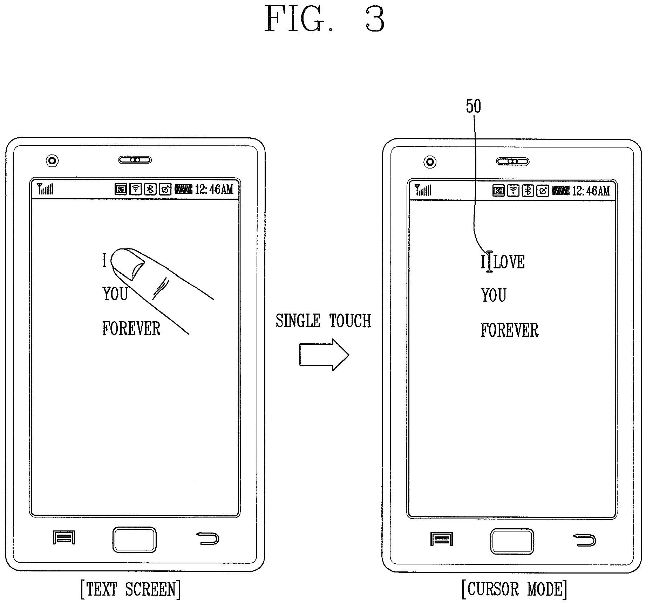

FIG. 3 is a view showing an example to set a cursor mode and to display a cursor icon in the cursor mode.

Once a user enters a text edition mode, a cursor or a cursor icon is not displayed on the display unit 151. However, once the user touches a predetermined region on a text screen, the controller 180 sets a cursor mode and then displays a cursor icon in a preset color (e.g., blue) on the screen. And, the controller outputs effects (sound and vibration) and an indicator through the output unit 150.

The cursor icon 50 may be displayed at the first or last part of a word, or at a touched position according to a user's setting.

In the cursor mode, the cursor icon 50 is moved through a multi-touch input[](touch & drag and multi-touch flicking). The most basic method is to move the cursor icon 50 to a specific position through a touch & drag operation. This method is advantageous in that the cursor icon 50 is moved to a desired position through a single touch & drag operation. However, it is difficult to apply the method to a sentence consisting of small words with a high density.

In the present invention, in order to overcome the disadvantage of moving the cursor through a touch & drag operation, a cursor neighboring region is flicked to move the cursor icon 50 to a corresponding direction.

In the present invention, once a user selects an edition mode from an e-book, a cursor and an edition mode conversion icon are displayed on a screen. In this state, if the edition mode conversion icon is selected, a color of the cursor may be changed to a preset color for entering a cursor mode.

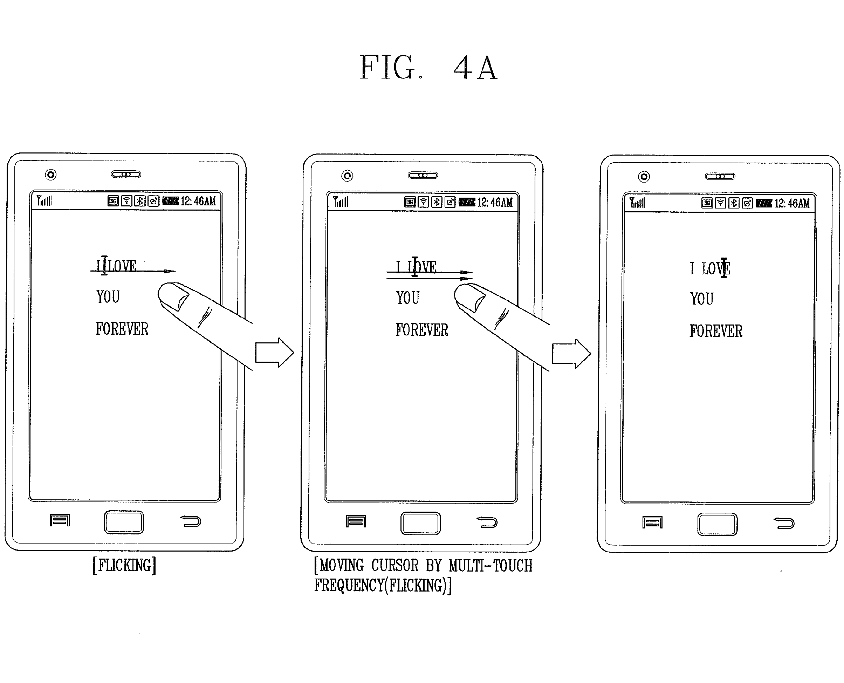

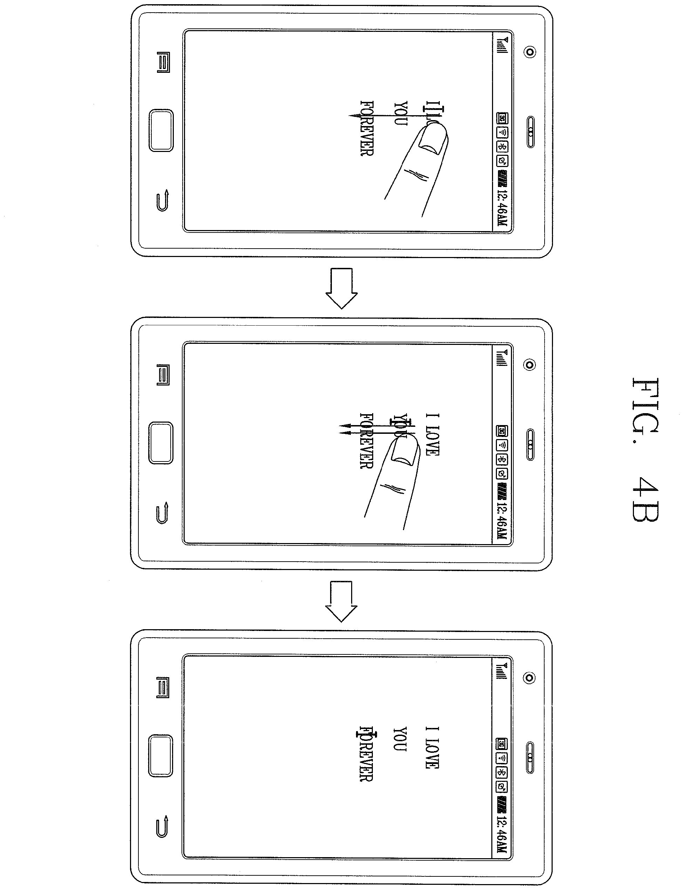

FIGS. 4A to 4C are views showing examples to move a cursor icon through a touch operation in a cursor mode. Especially, FIGS. 4A and 4B are views showing examples to move a cursor icon by flicking a cursor neighboring region icon.

As shown in FIG. 4A, once a user touches a letter, 'o' included in a text, "I love you forever." displayed on a screen, the controller 180 displays the cursor icon 50 of a blue color at a front side of the letter, 'o'.

If the cursor icon 50 is to be moved in this state, the user flicks a cursor neighboring region icon to a predetermined direction. The cursor neighboring region icon is a preset region, and is within a range including one upper line and one lower line based on a line where the cursor is displayed. If the user flicks the cursor neighboring region icon right and left or up and down, the controller 180 moves the cursor icon by one character (one line) toward a corresponding direction according to a flicking frequency. As shown in FIG. 4A, if the user flicks the cursor neighboring region once toward the right direction, the cursor icon is moved by one line. However, if the user flicks the cursor neighboring region twice toward the right direction, the cursor icon is moved by two lines.

As shown in FIG. 4B, if the user flicks the cursor neighboring region once toward the lower direction, the cursor icon is moved by one line. However, if the user flicks the cursor neighboring region twice toward the lower direction, the cursor icon is moved by two lines.

If a text region spaced from the cursor icon is touched, the controller 180 moves the cursor icon to the corresponding part.

This method has an advantage that the cursor icon can be moved in detail by a desired line according to a flicking frequency. However, this method has a disadvantage that visibility of a text is lowered since a user's finger blocks the cursor icon for flicking.

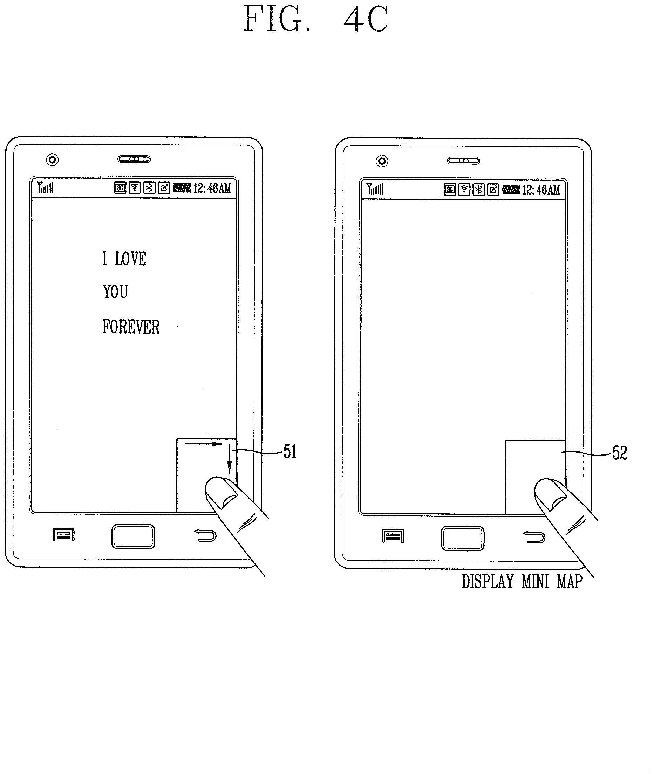

As shown in FIG. 4C, a flicking operation is performed on a specific region 51 or a mini map 52 on a screen to move the cursor icon, the mini map 52 where a predetermined region of a text is displayed.

The specific region 51 or the mini map may be selected from a detailed menu in a cursor mode. Under this configuration, the cursor icon may be moved in detail since the specific region 51 or the mini map 52 is flicked in an independent manner from the cursor icon.

If there is no input for a predetermined time in a state that the cursor icon has been displayed or moved, the cursor mode is automatically released.

### 2. Converting a cursor mode into a block mode

In the aforementioned cursor mode, a user performs a text edition (input and deletion) with moving the cursor icon through flicking. During the text edition, the user sets a text range (block setting) to perform additional editions with respect to a corresponding block (selection, block addition, copy, cut and paste, search and replace, and deletion). For these additional editions, the cursor mode has to be converted into a block mode.

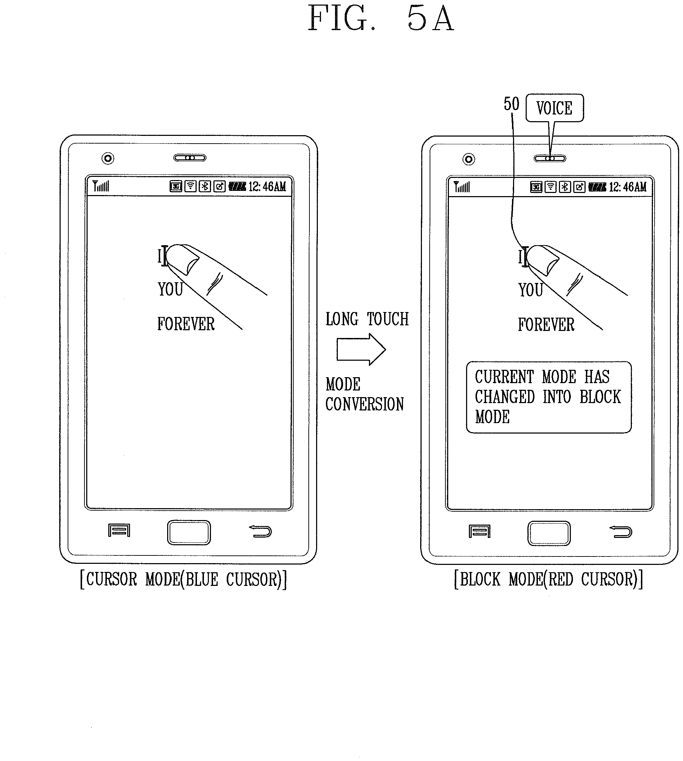

FIG. 5A is a view showing an example to convert a cursor mode into a block mode according to the present invention.

As shown in FIG. 5A, once a user long-touches a cursor neighboring region icon in a cursor mode, the controller 180 converts the cursor mode into a block mode. Then, the controller 180 displays, on a screen, information indicating that a block mode has been set as a current mode (block mode setting). Here, the cursor neighboring region icon indicates a region through which selection of the cursor icon is recognizable. The information indicating block mode setting includes a color change of the cursor icon to another color (e.g., a change to a red color from a blue color), a shape and size change of the cursor icon, and various effects (sound and vibration).

In the present invention, once a cursor mode is converted into a block mode, the cursor icon has a color change to a red color from a blue color. If a mode change has been performed, a voice indicating the mode change may be output, or a message (e.g., the current mode has been converted into a block mode) may be displayed on an additional pop-up window.

If the cursor neighboring region icon is long-touched in the block mode, the block mode is converted into the cursor mode, and the cursor icon has a color change to the original color (blue) from the red color. That is, a switching operation between the cursor mode and the block mode is performed by long-touching the cursor neighboring region icon in the cursor mode.

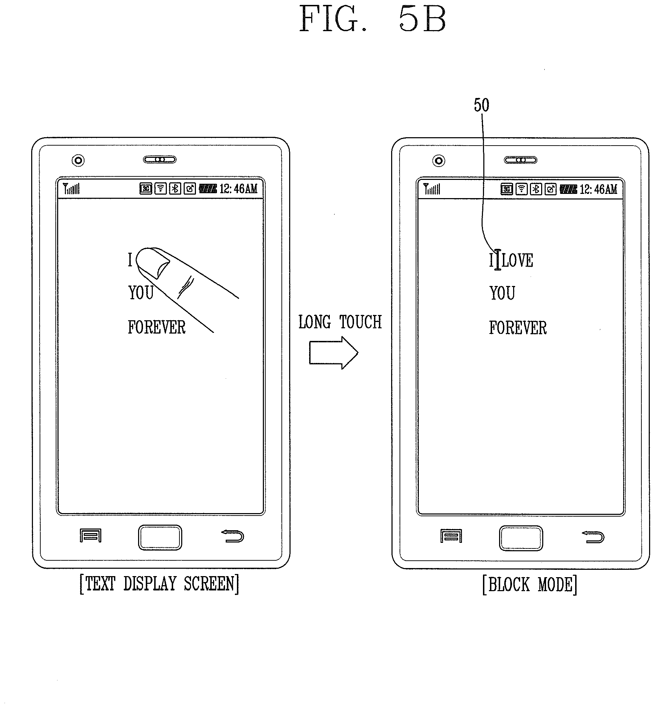

In the present invention, the block mode may be directly set on the initial text edition screen without via the cursor mode. FIG. 5B is a view showing an example to set a block mode on the initial text edition screen.

As shown in FIG. 5B, once a user long-touches a predetermined region on a text screen, the controller 180 displays the cursor icon 50 of a red color on the touched part to indicate that a block mode has been set as a current mode. The block mode is automatically released when a region rather than a text region has been touched.

### 3. Moving and operating a cursor icon in a block mode

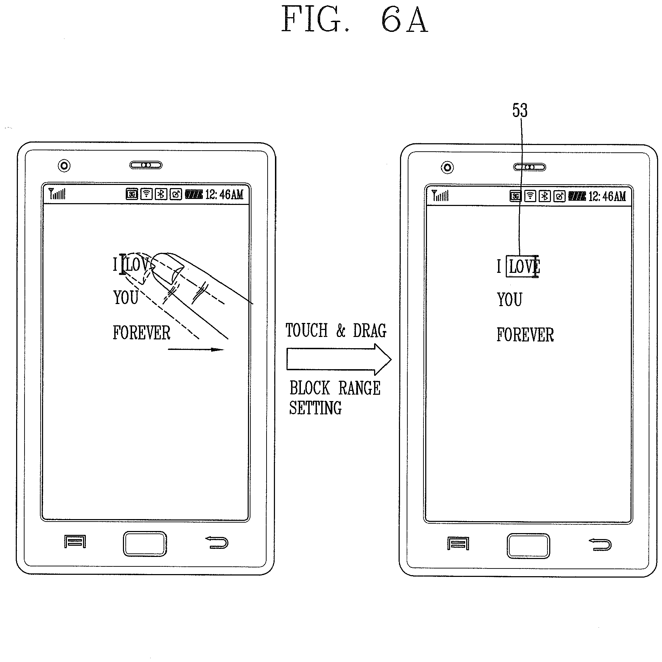

FIGS. 6A to 6D are views showing examples to set a block range in a block mode.

Once a predetermined text region spaced from the cursor icon is touched in a block mode, the cursor icon is moved to the corresponding region

Referring to FIG. 6A, block setting may be performed through a touch & drag operation with respect to the cursor icon in a block mode. Here, a region to be set as a block may be highlighted (changes of a color, a background, an underline, an edge, etc.) so as to be distinguished from other text.

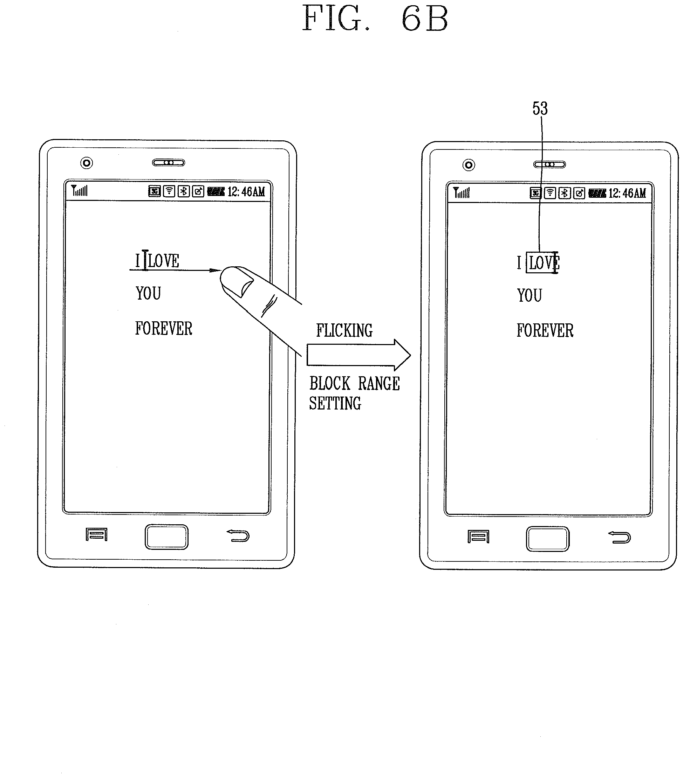

Alternatively, a block range may be set by moving the cursor icon shown in FIGS. 4A to 4C. More concretely, as shown in FIG. 6B, if a user flicks the cursor icon according to a predetermined direction (upper, lower, right and left directions) and a frequency at a cursor neighboring region, a specific region, and a mini map, the cursor icon is moved according to the flicking frequency and a block range (touch range) is set.

In the present invention, a touch range may be set according to a double touch frequency.

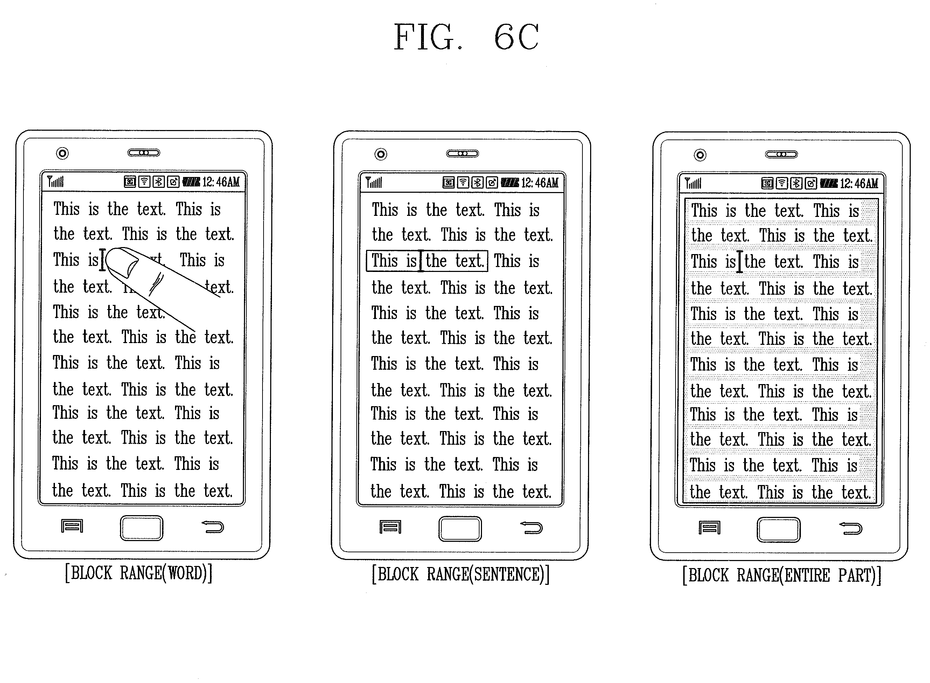

FIG. 6C is a view showing a touch range according to a double touch frequency.

Referring to FIG. 6C, once a user double-touches a cursor neighboring region icon in a block mode, the controller 180 automatically controls a block range according to a double touch frequency. That is, a block range is automatically controlled in order of a word, a sentence, an entire text and a word according to a double touch frequency. However, the present invention is not limited to this. For instance, the block range may be controlled in order of a phrase, a clause, a sentence and a page. The block range may be variously controlled according to a user's menu setting.

In the present invention, as a double touch frequency is increased, a block range is increased and then is restored to the original state. Under this configuration, a block range may be variable.

However, the present invention is not limited to this. For instance, the block range may be controlled in various manners, e.g., by detecting a user's gesture through a motion sensor or by detecting a gradient of the mobile terminal.

As shown in FIG. 6C, if it is difficult to perform block setting due to a small text size, a user may change a text font by enlarging or contracting the entire screen. Upon completion of the block setting on a screen having a changed text font, the screen is automatically restored to the original screen.

The user may perform each type of operations such as copy and paste on each set block. In order to allow the user to perform an edition operation with respect to the set block, an option menu may be provided.

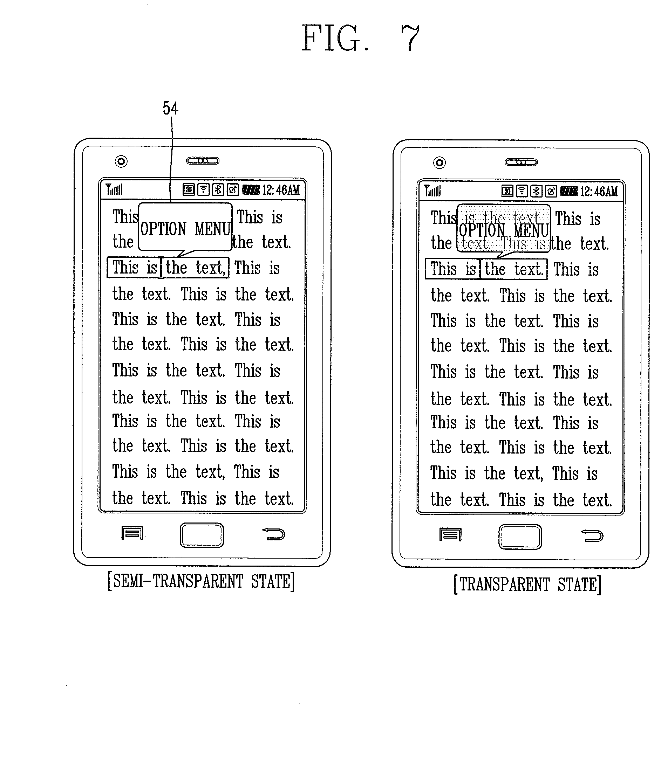

FIG. 7 is a view showing examples to display an option menu at one side of a set block.

Upon completion of block setting by the aforementioned methods, the controller 180 displays an option menu of a predetermined shape (e.g., balloon) automatically or according to a touch input. The option menu may be displayed in a transparent state so that a text may not be covered. If necessary, the option menu may be displayed on an additional screen. Preferably, the option menu may include items for performing each type of editions with respect to a set block, e.g., selection, block addition, copy, cut and paste, search and replace, deletion and so on. A user may select a desired number of the items included in the option menu.

In the present invention, one or more text blocks (multi blocks) may be set on a text screen. The new text block may be set by fixing one set block in a touch manner, and then by moving the cursor icon to another region.

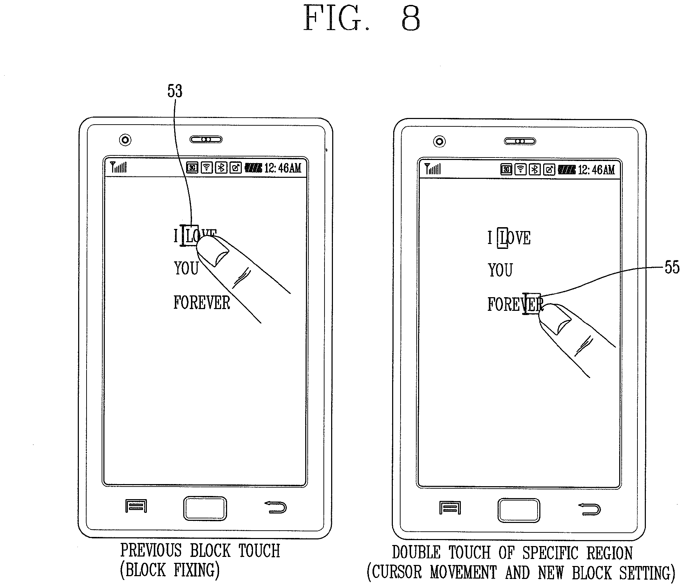

FIG. 8 is a view showing an example to set multi blocks according to the present invention.

A block addition operation is performed by moving the cursor icon by touching a text region (word) in a state that the existing block has been touched, and then by retouching the text region. More concretely, once a specific region is double-tapped in a state that the existing block 53 has been touched, a new block 54 is set on the specific region. In this case, if the edge of the existing block is touched, the existing block is fixed. If the existing block is touched once more, the fixed state is released to allow additional controls of a block range.

In the present invention, the fixed block may be moved in a drag manner. Then, if the edge of the fixed block is touched, the fixed state is released to allow additional controls of a block range.

One or more blocks may be set on a text screen, and a range of each block may be controlled by repeatedly performing the method.

Once a plurality of blocks have been set on one text screen, a user may perform editions with respect to part (word and sentence) or the entire part of a text included in some or the entire blocks by using an option menu.

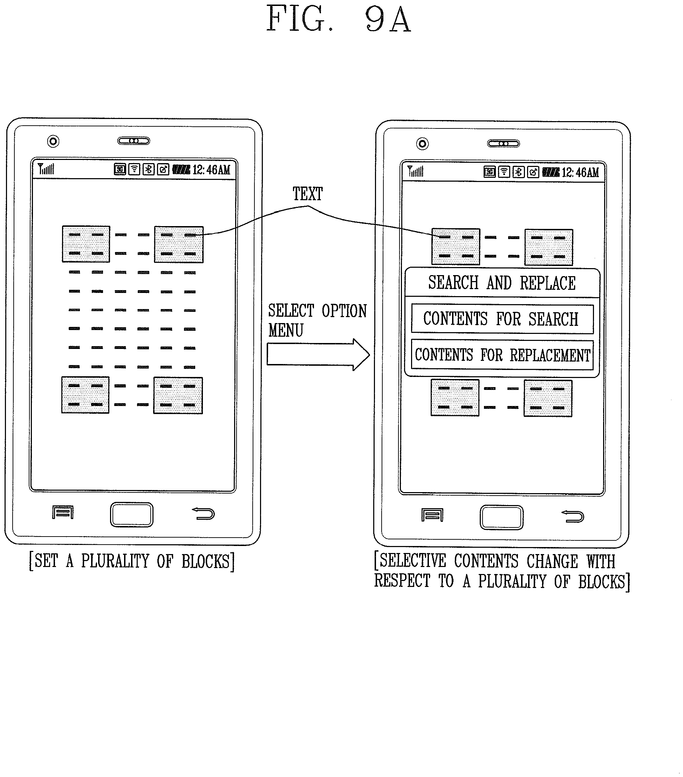

FIG. 9A is a view showing an example to change text contents (word or sentence) with respect to a plurality of bocks.

As aforementioned, upon completion of block setting, an option menu is displayed on an additional region by a user's selection or under control of the controller 180. The user may simultaneously change contents of one or more blocks by selecting a search and replace item from the option menu, and then by inputting a word or a sentence to be changed.

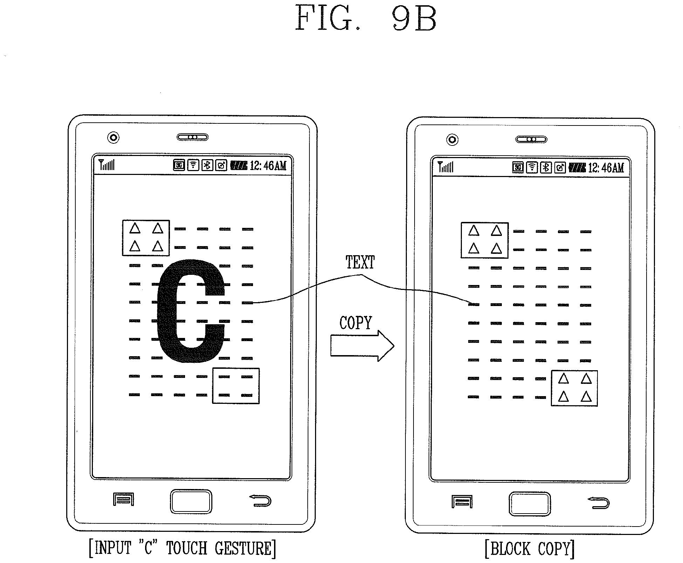

As shown in FIG. 9B, various edition operations included in the option menu may be performed through a touch gesture without using the option menu in a state one or more blocks have been set. The touch gesture is performed in an alphabetical manner. For instance, a C-shaped touch gesture is performed for copy, and a B-shaped touch gesture is performed for block selection.

A text edition between blocks may be performed on not only one text screen (page), but also another text screen (page) associated with one text screen. More concretely, block setting is performed on one page, and then new block setting is performed on another page. Then, edition operations included in the option menu may be simultaneously performed in a selective manner with respect to the two blocks set on the different pages.

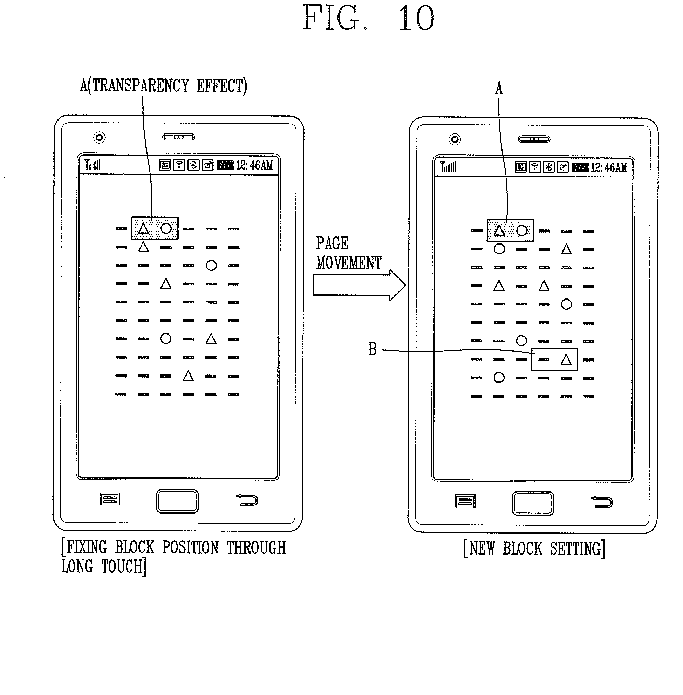

FIG. 10 is a view showing edition operations with respect to blocks set on different pages.

As shown in FIG. 10, a block (A) is set with respect to a predetermined region of a text on a specific page, and then the block (A) is long-touched. Then, the controller 180 fixes the long-touched block (A), and displays the long-touched block (A) in a transparent state. The block (A) fixed in a transparent state is continuously displayed on the corresponding position even if a page switching operation is performed. That is, the block (A) is moved to another page in a fixed state to the same position.

Here, the user moves to a desired page to set a new block (B) with respect to a text of the page, and then performs at least one of the aforementioned edition operations with respect to the two blocks (A) and (B).

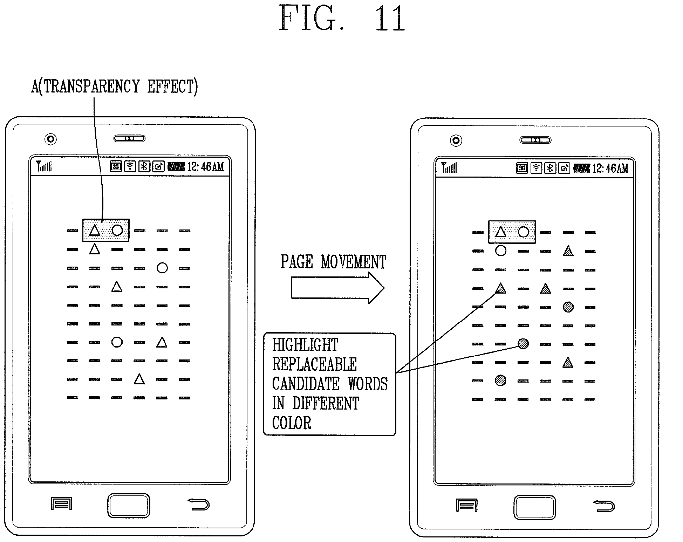

FIG. 11 is a view showing an example to display replaceable candidate characters when a fixed block is displayed on a different page.

As aforementioned, the block (A) having a fixed position through a long touch operation is continuously displayed on the corresponding position even if a page switching operation is performed. If the user moves to another page in a state that the block (A) has been fixed, the controller 180 highlights words on a text corresponding to contents (word, sentence) included in the block (A) on each page, i.e., replaceable candidate words in a different color.

This may allow the user to perform an edition operation (e.g., replacement or deletion) with respect to the highlighted words at one time, based on an option menu, with moving to another page.

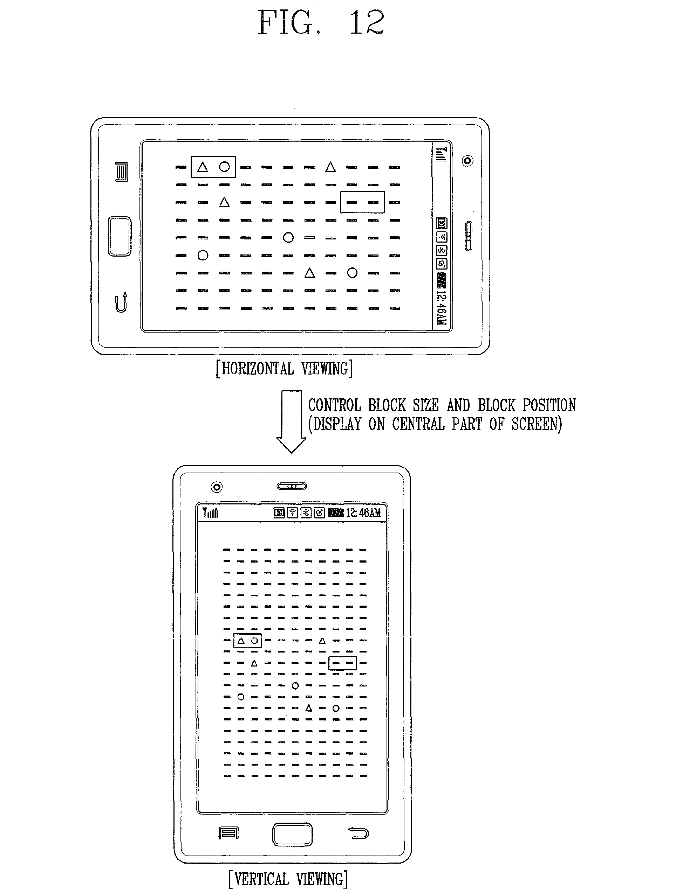

FIG. 12 is a view showing an example to display blocks when converting a screen display mode according to the present invention.

As shown in FIG. 12, once a screen display mode is changed to a vertical mode (portrait mode) in a state that blocks have been set in a horizontal mode (landscape mode), the controller 180 contracts a block size so that all of the blocks selected by a user may be viewed, and automatically controls display positions so that the blocks may be positioned on a central part of a screen.

In the aforementioned embodiments, screen display is performed with respect to edition operations in a cursor mode or a block mode. However, the present invention is not limited to this. That is, the present invention may provide screen display capable of simultaneously implementing a cursor mode and a block mode.

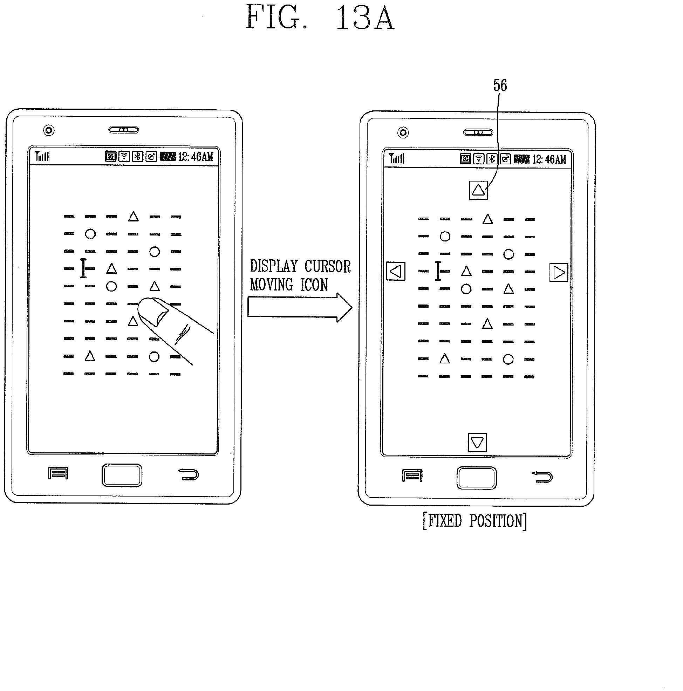

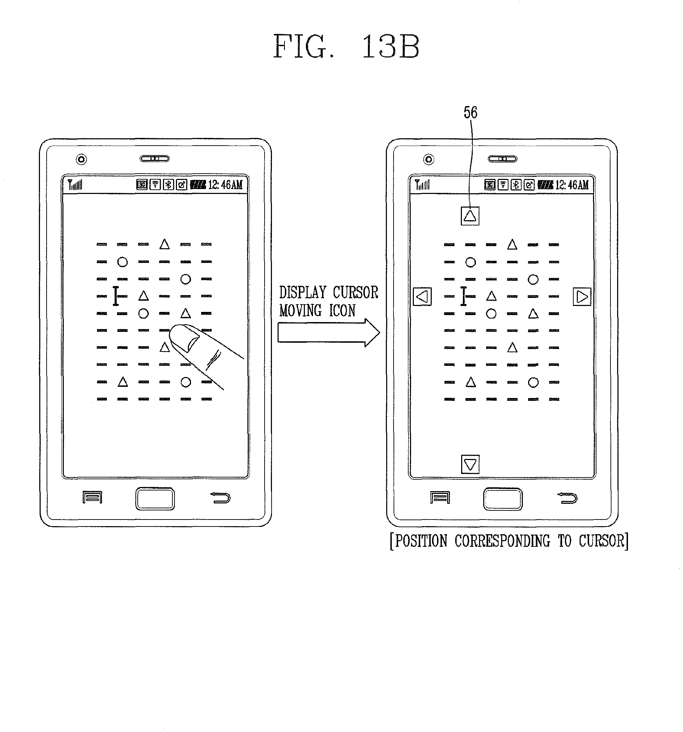

FIGS. 13A and 13B are views showing cursor movements using miniature icons.

As shown in FIGS. 13A and 13B, once a user touches a text screen in a text edition mode, miniature icons or pallets (cursor moving icons) 56 for moving a cursor icon are displayed on upper, lower, right and left sides of the text screen. FIG. 13A shows that the miniature icons 56 are displayed on fixed positions, and FIG. 13B shows that the miniature icons 56 are displayed on positions corresponding to a cursor position. The miniature icons 56 may be displayed only right and left.

As aforementioned, the user may move the cursor in detail up and down and right and left by touching the right and left sides of the cursor, or by touching the miniature icons 56 disposed on the upper, lower, right and left sides of a text.

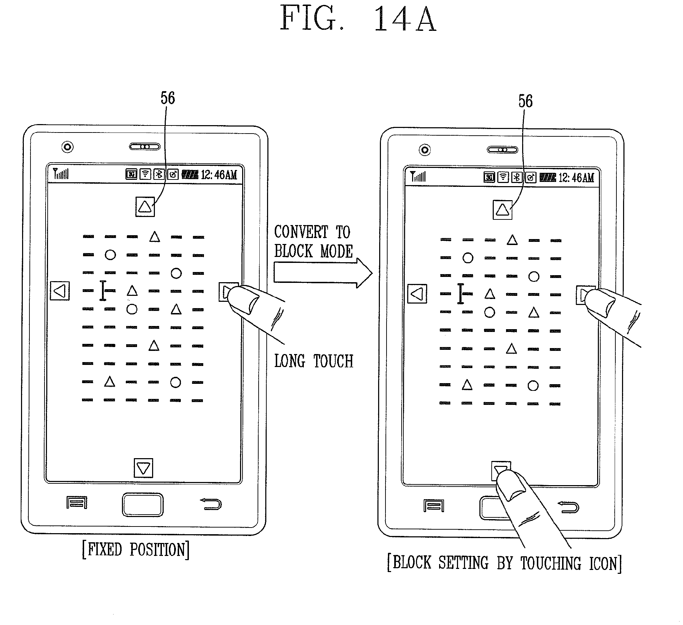

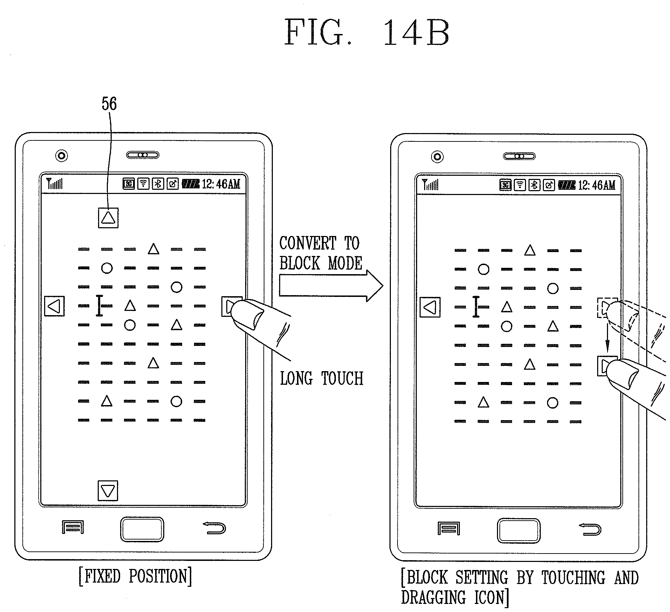

FIGS. 14A and 14B are views showing examples to perform block setting using miniature icons.

As shown in FIG. 14A, once the user long-touches one of the miniature icons 56 shown in FIG. 13A, the controller 180 converts an operation mode of the mobile terminal to a block mode from a cursor mode. Then, the controller 180 changes a cursor color to a red color (outputs of a text message and a voice message). Once the operation mode is converted into the block mode, the user touches the miniature icons 56 displayed on the upper, lower, right and left sides to perform block setting with respect to a desired word and sentence. Here, the word and sentence are highlighted (changes of a color, a background, an underline, an edge, etc.) so as to be distinguished from other text.

Referring to FIG. 14B, if the user long-touches the miniature icon 56 positioned on the same line as the cursor, the controller 180 converts an operation mode of the mobile terminal to a block mode from a cursor mode. Then, the controller 180 changes a cursor color to a red color (outputs of a text message and a voice message). Once the operation mode is converted into the block mode, the controller 180 displays the miniature icons 56 only on the right and left sides of the cursor. Accordingly, the user may perform block setting with respect to a desired word and sentence in the right and left by touching the miniature icons 56 positioned at the right and left sides, and may perform block setting up and down by touching the miniature icons 56 and then by dragging to corresponding positions (up-down drag). Here, the word and sentence is highlighted (changes of a color, a background, an underline, an edge, etc.) so as to be distinguished from other text.

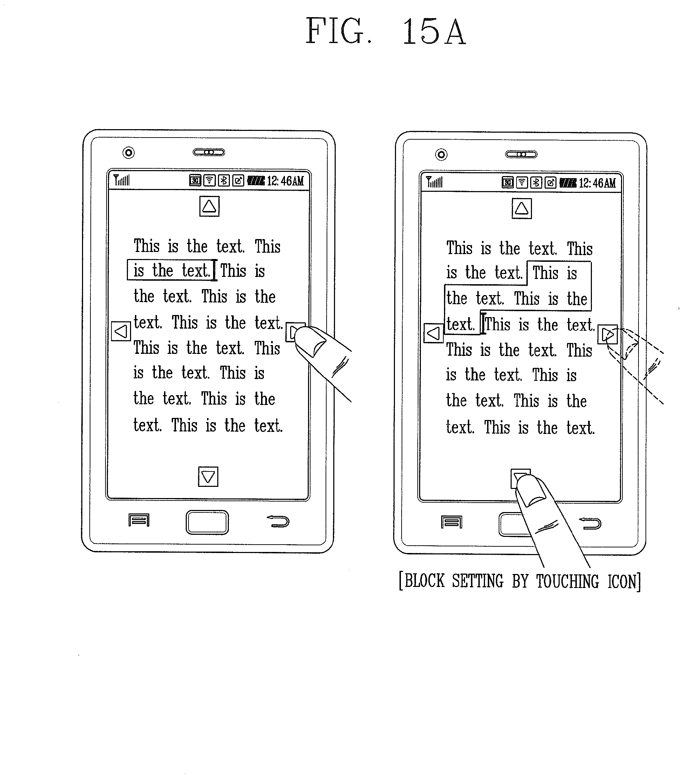

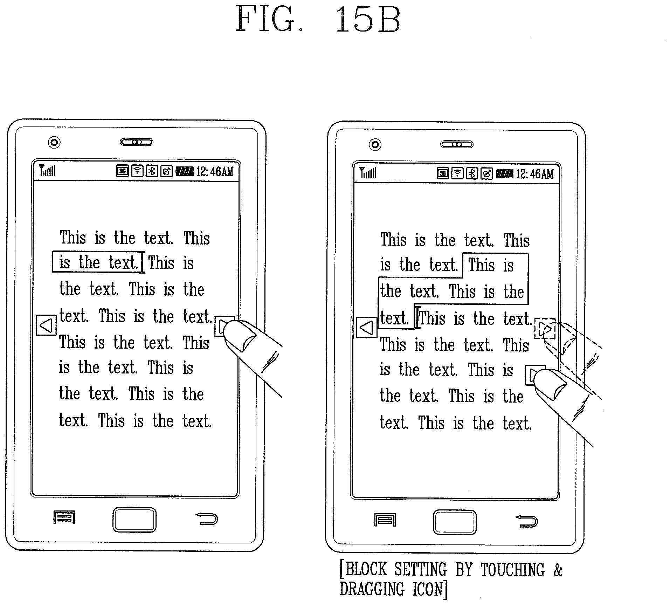

FIGS. 15A and 15B are views showing detailed operations of FIGS. 14A and 14B.

As aforementioned, in FIG. 15A, block setting with respect to a desired word and sentence is performed by touching the miniature icons 56 positioned on the upper, lower, right and left sides by a user. In FIG. 15B, a user performs block setting in the right and left by touching the miniature icons 56 in a state that a cursor has been positioned, and performs block setting up and down by touching the miniature icon 56 and then dragging to a corresponding position. Even in a case that the miniature icons are displayed only right and left in a cursor mode, moving the cursor and block setting are performed as shown in FIGS. 14B and 15B.

New block setting may be performed in the same manner as the aforementioned method by using the miniature icons 56. And, edition operations with respect to each block or blocks on the same page, or blocks on different pages may be performed in the same manner as the aforementioned method.

The block mode is released when the miniature icons are long-touched again.

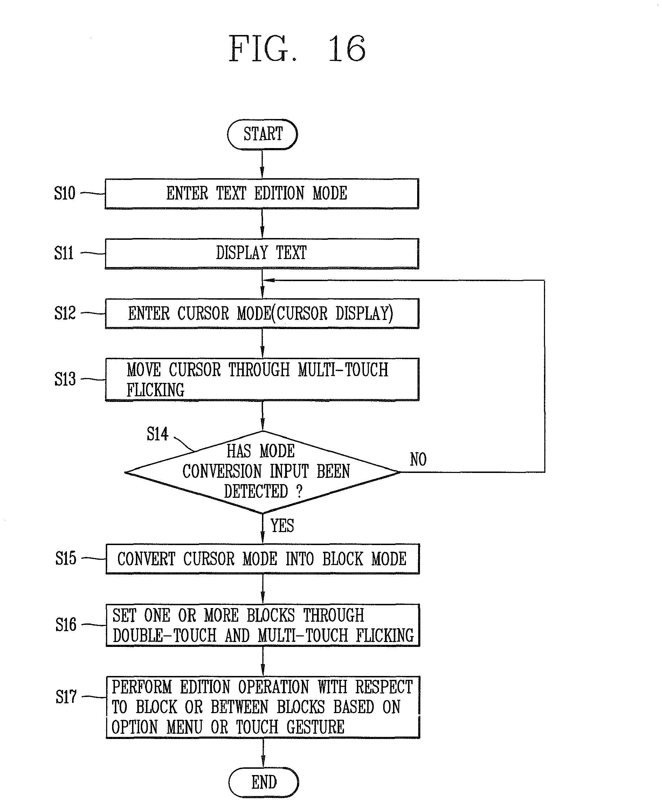

FIG. 16 is a flowchart showing a text cursor operating method of a mobile terminal according to one embodiment of the present invention.

As shown in FIG. 16, once a user selects a text edition mode, a predetermined text is displayed on the display unit 151 (S10, S11). If the user touches one side of the screen (text region) in a state that the predetermined text has been displayed, the controller 180 displays a cursor icon (hereinafter, will be referred to as a cursor) on the touched position. Here, the controller 180 informs that a cursor mode has been set as a current mode, by displaying a cursor of a predetermined shape and color according to a predetermined setting (S12).

In the cursor mode, the user flicks or double-touches a cursor neighboring region (or an additional region), and the controller 180 moves the cursor according to a flicking frequency or a double-touch frequency (S13).

Then, if the user long-touches the cursor neighboring region, i.e. upon detection of a mode conversion input, the controller 180 converts the cursor mode into a block mode. Then, the controller 180 changes a color or a shape of the cursor, or outputs a voice or outputs an additional message on a pop-up window so as to inform that a block mode has been set as a current mode (S15).

The user touches the cursor neighboring region (or additional region) in the block mode, and then moves the cursor to perform block setting with respect to a predetermined text region by the aforementioned method (S16). The block setting is performed on the same page or different pages, and a part having been set as a block is highlighted (changes of a color, a background, an underline, an edge, etc.) so as to be distinguished from other text.

Once at least one block with respect to a text region has been set, the user performs edition operations with respect to each block or between blocks based on an option menu or a touch gesture. Here, the edition operations may include selection, block addition, copy, cut and paste, search and replace, deletion and so on.

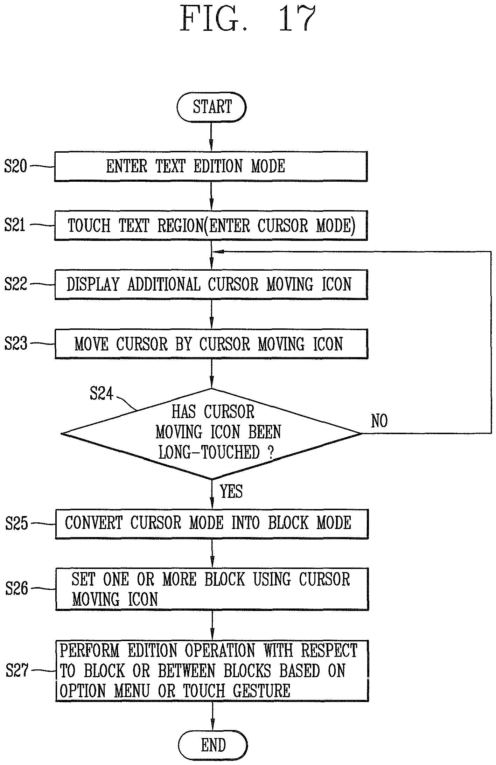

FIG. 17 is a flowchart showing a text cursor operating method of a mobile terminal according to another embodiment of the present invention. The text cursor operating method of FIG. 17 is applied to perform a cursor moving operation and a block setting operation with using an additional cursor moving icon.

Once a user touches a text region after entering a text edition mode, the controller 180 displays a cursor moving icon at one side of the text region as shown in FIGS. 13A and 13B (S20∼S22). Here, the controller 180 informs that a cursor mode has been set as a current mode, by displaying a cursor of a predetermined shape and color according to a predetermined setting.

In the cursor mode, the user consecutively touches the cursor moving icon, and the controller 180 moves the cursor according to a touch frequency (S23).

Then, if the user long-touches the cursor moving icon, i.e. upon detection of a mode conversion input (S24), the controller 180 converts the cursor mode into a block mode. Then, the controller 180 changes a color or a shape of the cursor, or outputs a voice or outputs an additional message on a pop-up window so as to inform that a block mode has been set as a current mode (S25).

In the block mode, the user consecutively touches the cursor moving icon, or drags the cursor moving icon to a predetermined region to perform block setting with respect to a text region (S26). The block setting is performed on the same page or different pages, and a part having been set as a block is highlighted (changes of a color, a background, an underline, an edge, etc.) so as to be distinguished from other text. An entire selection or an entire release is performed by multi-touching the cursor moving icon.

Once at least one block with respect to a text region has been set, the user performs edition operations with respect to each block or between blocks based on an option menu or a touch gesture. Here, the edition operations may include selection, block addition, copy, cut and paste, search and replace, deletion and so on.

As aforementioned, in the present invention, moving a cursor on a text, conversions between a cursor mode and a block mode, setting one or more blocks with respect to a text region in a block mode, and block movement is performed through touch and multi-touch operations (flicking, touch & drag and multi-touch). This may allow the user to more conveniently perform edition operations with respect to each block or between blocks, e.g., selection, block addition, copy, cut and paste, search and replace, deletion and so on.

The aforementioned method may be implemented as a program code stored in a computer-readable storage medium. The storage medium may include ROM, RAM, CD-ROM, a magnetic tape, a floppy disc, an optical data storage device, etc. And, the storage medium may be implemented as carrier wave (transmission through the Internet). The computer may include the controller of the mobile terminal.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A text cursor operating method of a mobile terminal (100), the method comprising:
setting (S12) a cursor mode in an edition mode;
moving (S13) a cursor through a flicking operation in the cursor mode;
converting (S14, S15) the cursor mode into a block mode according to a mode conversion input;
setting (S16) one or more blocks with respect to a text region by changing a touch range according to a multi-touch operation in a block mode; and
performing (S17) an edition operation with respect to the set blocks.

2. The method of claim 1, wherein the flicking is performed on a cursor neighboring region, and
wherein the mode conversion input includes a long touch with respect to a cursor neighboring region, or a long touch with respect to a specific region of a text in a state that the cursor has not been displayed.

3. The method of claim 1 or 2, wherein the multi-touch operation includes a touch & drag operation, a double touch operation and a flicking operation, and is performed on a cursor neighboring region or an additional region.

4. The method as claimed in any of the preceding claims, wherein the block range is increased or decreased by one line according to a multi-touch frequency, or is changed according to a preset range including a word, a sentence and a text,
wherein an option menu is automatically displayed upon completion of block setting.

5. The method as claimed in any of the preceding claims, wherein in the step (S16) of setting one or more blocks, a new block is set by double-tapping another region of a text in a state that the existing block has been touched or by double-touching another region of a text after fixing the existing block by touching an edge portion of the existing block.

6. The method as claimed in any of the preceding claims, wherein each set block has a fixed position when being long-touched, and is displayed on the same position even if a page switching operation is performed.

7. The method of claim 6, wherein the fixed block is displayed in a transparent state, and replaceable candidate words on a text of each page are highlighted in a different color when a user moves to another page.

8. The method as claimed in any of the preceding claims, further comprising:
displaying (S12) a cursor and a cursor moving icon when the text region is long-touched in an edition mode;
moving (S23) the cursor by touching a cursor moving icon in a cursor mode;
converting (S24, S25) the cursor mode into a block mode when the cursor moving icon is long-touched;
setting (S26) one or more blocks on a text region by touching or dragging the cursor moving icon in the block mode; and
performing (S27) an edition operation with respect to the set blocks,
wherein the cursor moving icon is selectively displayed on right and left sides or upper and lower sides of the text region.

9. The method of claim 8, wherein the block range is controlled according to a double-touch frequency, a flicking direction and a flicking frequency, a movement of a motion sensor, and a gradient of the mobile terminal.

10. The method of claim 8, wherein in the block mode, a block range within the same line is set by touching the cursor moving icon, and a block range including another line is set by touching and dragging the cursor moving icon.

11. mobile terminal (100), comprising:
a display unit (151) configured to display a cursor in a cursor mode; and
a controller (180) configured to:
move the cursor through a flicking operation on a text region in a cursor mode,
set one or more blocks on the text region by controlling a touch range through a multi-touch operation in a block mode, and
perform an edition operation with respect to the set blocks according to a user's input.

12. The mobile terminal of claim 11, wherein the cursor mode is set when a predetermined region of a text screen is touched or an edition mode conversion icon is touched,
wherein the cursor is displayed at a touched point or a starting or ending part of a word when a predetermined region of a text screen is touched, and
wherein the flicking is performed on a cursor neighboring region or an additional region.

13. The mobile terminal of claim 11 or 12, wherein the controller (180) is adapted to convert a cursor mode into a block mode when a cursor neighboring region is long-touched, and to control the mobile terminal to enter the block mode when a specific region of a text is long-touched in a state that the cursor has not been displayed.

14. The mobile terminal as claimed in any of the preceding claims 11-13, wherein the cursor is moved according to a flicking frequency, and
wherein the multi-touch includes touch & drag, double-touch and flicking, and is performed at a cursor neighboring region or an additional region.

15. The mobile terminal as claimed in any of the preceding claims, wherein the controller (180) is adapted to increase or decrease a block range by one line according to a multi-touch frequency, or to change the block range in the form of a word or a sentence or a text, and
wherein an option menu is automatically displayed upon completion of block setting.
